# EUROPEAN PATENT APPLICATION

(11) **EP 2 887 719 A1**
(43) Date of publication of application: **24.06.2015**
(21) Application number: 13306816.3
(22) Date of filing: 20.12.2013
(51) Int. Cl.: H04W 12/08, H04L 29/06

(54) **Method and device for accessing a contact-less service**

(71) Applicant: Gemalto SA, 92190 Meudon (FR)
(72) Inventor: Hugot, Didier, 13705 La Ciotat (FR)

(57) **Abstract**

The invention relates to a method 20 for accessing a contact-less service.

According to the invention, the method comprises the following steps. A first device 10 sends, through a first contact-less link, to a second device 110 at least one first device user identifier 22. The second device sends, through the first contact-less link, to the first device at least one parameter 24 for connecting to a second contact-less network, as at least one second contact-less network connection parameter allocated to the first device user. The first device configures automatically an access to a second contact-less network based upon the at least one second contact-less network connection parameter. And the first device connects, through a second contact-less link, to the second contact-less network, as temporary network.

The invention also relates to a corresponding first device 10.

## Description

### Field of the invention:

The invention relates generally to a method for accessing a contact-less service.

Furthermore, the invention pertains to a first device for accessing a contact-less service.

Within the present description, the adjective "contact-less" used within the expression "contact-less service" means notably that a first device communicates, via a Short Range (or SR) Radio-Frequency (or RF) link, with an external second device by using, e.g., International Organization Standardization / International Electrotechnical Commission (or ISO/IEC) 14 443 specifications, a Ultra High Frequency RadioFrequency IDentification (or UHF RFID) technology, Institute of Electrical and Electronics Engineers' (IEEE) 802.11 standards, any contact-less or wireless type technology or the like.

### State of the art:

A known solution for communicating in a contact-less manner is based upon a Near Field Communication (or NFC) enabled device, like a mobile (tele)phone, that includes and cooperates with a Secure Element (or SE), so as to exchange, over a contact-less link, data between the SE and another NFC device.

The NFC enabled device manages an NFC card emulation mode within the SE.

However, it is not possible to use the NFC card emulation mode when there is no SE based application.

Thus, there is a need to provide a solution that manages an easy and immediate "tap and go" approach using an NFC enabled device when the NFC card emulation mode is not available at the NFC enabled device.

### Summary of the invention:

The invention proposes a solution for satisfying the just herein above specified need by providing a method for accessing a contact-less service.

According to the invention, the method comprises the following steps. A first device sends, through a first contact-less link, to a second device at least one first device user identifier. The second device sends, through the first contact-less link, to the first device at least one parameter for connecting to a second contact-less network, as at least one second contact-less network connection parameter allocated to the first device user. The first device configures automatically an access to a second contact-less network based upon the at least one second contact-less network connection parameter. And the first device connects, through a second contact-less link, to the second contact-less network, as temporary network.

The principle of the invention consists in using a device, in a reader mode, to send a device user identifier(s), over a first contact-less link, to another device that sends back one or several parameters for connecting to a second contact-less network. Thus, the communication initiating device, as first device, connects to the second device, over a second contact-less link, after its configuration.

Such a "double" contact-less cooperation between the first and second device allows creating a user specific second contact-less network, as personal network.

As a matter of fact, once the second device (or a device connected to the second device) has identified the first device user (or the like) and associated her/him with a parameter(s) for connecting to a second contact-less network, the first device is able to connect to the second contact-less network.

The invention solution is secure since only the first device user is authorized to use the parameter(s) for connecting to a second contact-less network.

Such a connection to the second contact-less network is temporary since, when the first device leaves an area under range of the radio-coverage of the second contact-less network, the second contact-less connection is close.

Such a temporary connection to the second contact-less network allows limiting a number of attacks, like an attack of Deny of Service (or DoS).

The first device user does not have to enter or type any data for configuring the first device to access the second contact-less network.

The invention solution is thus user friendly and compatible with an easy and immediate "tap and go" approach.

Moreover, the invention solution is dynamic since the parameter(s) for connecting to a second contact-less network is(are) firstly generated for the first device user who is connected over the first contact-less network and then no more valid after a unique use.

According to a further aspect, the invention is a first device for accessing a contact-less service.

According to the invention, the first device is adapted to send, through a first contact-less link, at least one first device user identifier. The first device is adapted to receive, through the first contact-less link, at least one parameter for connecting to a second contact-less network, as at least one second contact-less network connection parameter allocated to the first device user. The first device is adapted to configure automatically an access to a second contact-less network based upon the at least one second contact-less network connection parameter. And the first device is adapted to connect, through a second contact-less link, to the second contact-less network, as temporary network.

As to such a first device, it may be a user terminal or any device including means for processing data, comprising or being connected to means for communicating, over two or more contact-less channels, with outside, comprising or being connected to means for interfacing with a user, as Man Machine Interface (or MMI), and comprising or being connected to means (not represented) for storing data.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of an NFC-Wifi enabled mobile phone, as first device for accessing a contact-less service, that interacts, over an NFC channel, with an NFC-Wifi terminal, the phone being configured to connect to a Wifi network thanks to configuration data provided, over the NFC channel, by the terminal, according to the invention; and
- Figure 2 represents an example of one message flow between the phone and the terminal of Figure 1, so as to access dynamically a service from the phone to the Wifi-network, as user specific and temporary network.

### Detailed description:

Herein under is considered a case in which the invention method for accessing a contact-less service is implemented by a mobile phone, as user terminal and first device, and a Point of Sale (or POS) type terminal, as second device.

Naturally, the herein below described embodiment is only for exemplifying purposes and is not considered to reduce the scope of the invention.

Instead of a user terminal, the first device is a token.

Within the present description, a token or termed Secure Element is a smart electronic device that is intended to communicate, over two contact-less channels, with the outside world.

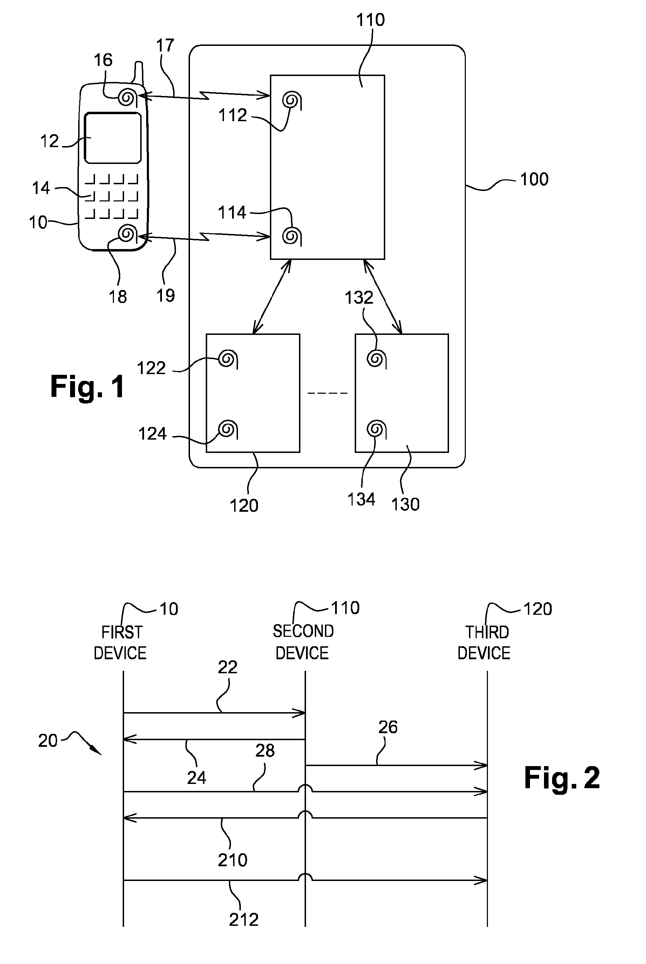

**Figure 1** shows schematically a mobile phone 10, as a user terminal, and a network 100 including one or several POS terminals.

For sake of simplicity, the mobile phone 10 and the POS terminal network 100 are termed hereinafter the phone 10 and the network 100 respectively.

As user terminal, it may be, instead of a phone, among others, a Personal Computer (or PC), a netbook, a tablet computer, a handset, a laptop, a digital camera, a game player, a video player, a digital audio player or any other device that has or is connected to at least two contact-less communicating means.

Such a user terminal set is not exhaustive but only for exemplifying purposes.

The phone 10, as a ubiquitous user terminal, belongs preferably to the terminal user.

Only one phone 10, as user terminal, is represented for clarity and simplicity reasons.

However, the network 100 may be connected, in a simultaneous or successive manner, to a plurality (or fleet) of such user terminals (not represented).

The phone 10 comprises a battery (not represented), a display screen 12 and a keyboard 14, as a phone MMI.

Alternatively (not represented), instead of a separate (physical) keyboard, the display screen integrates a (virtual) touch sensitive keyboard, when activated.

Instead of integrating the MMI, the phone is connected to an external display screen and/or an external keyboard, as deported MMI.

The phone 10 includes preferably one or several microprocessors (not represented), as data processing means, one or several memories (not represented), as data storing means, and at least three Input/Output (or I/O) interfaces, as means for communicating with outside.

The phone 10 comprises an NFC (registered Trademark) chip (not represented) soldered on the phone Printed Circuit Board (or PCB).

The NFC chip is also termed CLF (acronym for "Contact-Less Front-end").

The CLF includes a microprocessor (not represented), as means for processing data, one memory(ies) (not represented), as means for storing data, and at least two I/O interfaces (not represented) for exchanging data with the outside world.

The CLF is connected to a phone microprocessor.

The CLF is also connected to a first Contact-Less (or CL) antenna 16.

The first CL antenna 16 is configured to exchange, through a first Short Range (or SR) Radio-Frequency (or RF) link 17, with an external entity, data.

The first SR RF is, for example, 13,56 MHz.

In a reader mode, i.e. when the phone 10 also powers an external CL communicating Device (or CLD), like a POS terminal included within the network 100, the CLF receives power from the phone 10 battery, the CLF powers the CLD by sending an SR RF signal.

The phone 10, as an NFC enabled handset, is thus enabled to exchange data, over an NFC channel, as first CL channel, with an external CLD.

The CLF plays a role of a modulator-demodulator (or modem) for the phone 10, i.e. a device that may:
- modulate an analogical carrier signal to encode digital information received from the phone 10 (microprocessor) to be transmitted, over the first CL antenna 16, to an external CLD; and/or
- demodulate a received analogical carrier signal to decode an encoded digital information that is received, over the first CL antenna 16, from an external CLD.

The phone 10 is enabled to communicate, over an NFC link 17, as a first CL link, with an external CLD.

A phone memory stores an Operating System (or OS).

The OS is configurable. The OS may be configured for accessing, over a Wifi (registered Trademark) channel, as a second CL channel, an external CL device, like a POS terminal included within the network 100.

The second CL channel is, e.g. a Wifi channel, as a wireless type technology channel.

The configuration uses one or several parameters for connecting to a CLD, as CL network connection parameter(s).

The CL network connection parameter(s) may include:
- a Service Set IDentifier (or SSID) or any virtual network identifier that is broadcast by an Access Point (or AP) comprised within a CL network 100, as virtual network identifier;
- a login, as credentials;
- a password, as credentials;
- a passphrase, as credentials;
- a Personal Identity Number (or PIN) code, as credentials;
- a key for encrypting/decrypting data to be sent to/to be received from outside, as credentials;
- one or several address(es), like an Internet Protocol (or IP) address, relating to one or several Wifi hotspots relating to the POS terminals included within the network 100.

The phone 10 comprises a Wifi chip (not represented) soldered on the phone PCB.

The Wifi chip includes a microprocessor (not represented), as means for processing data, one memory(ies) (not represented), as means for storing data, and at least two I/O interfaces (not represented) for exchanging data with the outside world.

The Wifi chip is connected to a phone microprocessor.

The Wifi chip is also connected to a second CL antenna 18.

The second CL antenna 18 is configured to exchange data, through a second SR RF link 19, as a second CL link, with an external CLD.

The SR RF(ies) relating to a second CL link may be fixed from around 2,4 GHz to around 10 GHz (for Ultra Wide Band or UWB e.g. IEEE 802.15.4a), at 2,4-2,5 GHz with a range of about 10 m to 100 m (for Zigbee (e.g. IEEE 802.15.4), Wifi, Wifi Direct, and Bluetooth or Bluetooth low energy (e.g. IEEE 802.15.1)) and/or other frequency value(s) allowing to communicate at a SR (typically from about 20 cm to 800 m). The SR RF links 154 and 101, as first and third RF link respectively, are bi-directional, i.e. that enable to exchange data in two ways between the phone 10 and an external entity (like a CLD).

The phone 10, as a Wifi enabled handset, is thus enabled to exchange data, over a Wifi channel, as a second CL channel, with an external CLD.

The Wifi chip plays a role of a modulator-demodulator (or modem) for the phone 10, i.e. a device that may:
- modulate an analogical carrier signal to encode digital information received from the phone 10 (microprocessor) to be transmitted, over the second CL antenna 18, to an external CLD; and/or
- demodulate a received analogical carrier signal to decode an encoded digital information that is received, over the second CL antenna 18, from an external CLD.

One or several phone memories or a memory accessible from the phone microprocessor store non-executable data.

The phone 10 may be coupled to one or several tokens, like a smart card(s) or a chip soldered to the phone PCB, that is(are) thus accessible from the phone.

As non-executable data, it includes, as one or several identifiers relating to the phone 10, like:
- an International Mobile Equipment Identity (or IMEI) or the like, as a phone identifier;
- a Mobile Subscriber Integrated Digital network Number (or MSISDN);
- a Uniform Resource Identifier (or URI) or a Uniform Resource Locator (or URL) of the phone 10, as a phone address; and/or
- an Internet Protocol (or IP) address of the phone 10.

A Subscriber Identity Module (or SIM) type token stores non-executable data relating to the phone user, like an International Mobile Subscriber Identity (or IMSI) or the like.

As non-executable data, it includes, as one or several identifiers relating to the phone user:
- an account number(s);
- a User IDentifier (or UID) and/or a user password that allow(s) identifying and/or authenticating the user to any POS terminal included within the network 100;
- user data, like a banking account number, a first name, a last name, a birth date, and/or other appropriate data.

The phone memory(ies) store(s) one or several applications, as executable data.

As applications supported by the phone 10, there is an invention application that allows accessing a CL service.

The invention application may be written in an object-oriented language, such as Java, also termed applet when developed in Java.

The phone microprocessor processes data originating from the phone memory and/or an external entity(ies), like a CLD.

The phone microprocessor executes preferably the invention application, so as to interact with a target application supported by one or several CLD included within the network 100.

According to the invention, the phone 10 is adapted to fetch, over an NFC link 17, one or several parameters for connecting to a Wifi network while submitting, over the NFC link 17, an identifier relating to a phone user.

Once the phone 10 has fetched the Wifi network connection parameter(s), the phone 10 configures automatically an access to a Wifi network based on the Wifi network connection parameter(s).

The phone 10 connects, through a Wifi link 19, to the corresponding Wifi network.

The created Wifi network is dynamically generated, i.e. when the phone 10 is in a place where there is an NFC channel and a Wifi channel that are both available.

The created Wifi network is user specific as the phone user identifier is associated with the Wifi network connection parameter(s) that is(are) to be received by the phone 10.

The created Wifi network is valid only during a presence of the phone 10 under a Wifi radio coverage of a CLD relating to a Wifi network.

If the phone 10 moves and is no more under a Wifi radio coverage of the Wifi network, then the phone 10 has no more access to the created Wifi network.

The created Wifi network is secured since only the phone 10 user is connected to the created Wifi network.

The network 100 may include a Local Access Network (or LAN), a Wired Area Network (or WAN) or the like.

The network 100 also acts as a service provider and provides one or several services. The service(s) provided by the network 100 may include at least one element of the following group:
- a payment service;
- a service for loading rights for accessing a restricted area;
- a ticket validation service;
- a service for importing a boarding pass;
- a service for exporting an imported boarding pass.

Such a service set is not exhaustive but only for exemplifying purposes.

The network 100 includes e.g. a first POS terminal 110, a second POS terminal 120 and a third POS terminal 130, as set of one or several POS terminals.

The POS terminals relating to the network 100 are interconnected.

The POS terminals relating to the network 100 may exchange data by using an HyperText Transfer Protocol (or HTTP) or HTTPSecure (or HTTPS) type channel.

Each POS terminal 110, 120, 130 is preferably equipped with an NFC tag that includes an NFC antenna 112, 122, 132 respectively.

Each POS terminal 110, 120, 130 includes an Access Point (or AP) or hotspot that includes a Wifi antenna 114, 124, 134 respectively.

The AP, as Wifi router, broadcasts simultaneously a set of SSIDs, as virtual network identifiers.

When the network 100 allocates, through an NFC channel, an SSID to an identified interlocutor device, like the phone 10, one or several POS terminal that knows such an allocation is able to exchange with the concerned device.

Simultaneously, the AP of a POS terminal 110, 120 or 130 may exchange with as many identified interlocutor devices as the AP is able to broadcast SSIDs.

The network 100 plays a role of a provider, through an NFC channel of a POS terminal, of a generated second CL network.

Each POS terminal is a computer that includes data processing means and is able to execute an application for accessing a Wifi service.

Each POS terminal is preferably connected to a central computer (not represented) of the network 100.

The central computer is dedicated to running an application for managing a database relating to one or several parameters for connecting a Wifi network for each identified interlocutor device user.

Alternately, one POS terminal is dedicated to running an application for managing a database relating to one or several parameters for connecting a Wifi network for each identified interlocutor device user.

The database managing application allows allocating to an identified interlocutor device user one or several parameters for connecting to a Wifi network.

The database registers an association of each interlocutor device user identifier with one or several parameters for connecting to a Wifi network.

The central computer (or one POS terminal) accesses a memory (not represented) that stores the database.

The network central computer or the network 100 may be operated by a bank operator, a mobile communication network operator or a service provider or on its behalf.

The network central computer or the network 100 may be able to delegate to a remote server (not represented) connected to the network 100 one or several security functions, like user authentication, data decryption, data encryption, signature, verification of data integrity and/or application to data of an integrity algorithm.

The first POS terminal 110 is the POS terminal, as second device, that provides, over an NFC channel, the phone 10, as first device, with one or several parameters for connecting to a Wifi network that is(are) allocated to the identified phone user.

The first POS terminal 110 may transmit to the second POS terminal 120 and/or the third POS terminal 130 an association of a phone user identifier with the allocated parameter(s) for connecting to a Wifi network.

Each addressee of the association of the phone user identifier with the allocated parameter(s) for connecting to a Wifi network, namely the second POS terminal 120 or the third POS terminal 130, is thus able to recognize an interlocutor device user. The interlocutor device user is the only person who is authorized to access a service accessible through the created Wifi network within which the addressee is also included.

The thus created Wifi network is a personal virtual network that may be used in a public environment, such as a location where there are shops, a train station, an airport or the like, in a temporary manner.

The personal virtual network is a way of authenticating a user since she/he is the only person to know credentials to be used for accessing the personal virtual network and then to be connected to the personal virtual network. Then, the phone 10 is able to further exchange data, so as to access a second CL service.

**Figure 2** depicts an exemplary embodiment of the invention method 20 for accessing a CL service.

It is assumed that the phone 10 user enters into a confined space. The first POS terminal 110 is present within the confined space. The first POS terminal plays the role of a controller of access to a restricted area. The first POS terminal is included within an airport. The first POS terminal, as a check-in terminal, is dedicated to controlling a phone user prior to accessing a plane, when authorized.

It is assumed that the phone 10 stores a IMEI, as an identifier relating to the phone user.

It is assumed that the first POS terminal 110 (or another entity connected to the first POST terminal 110) determines an SSID, a login and a password, as individual parameters for connecting to a Wifi network, to be allocated to an identified phone user for a set of a predetermined number of users. The SSID is a virtual network identifier. The login and the password constitute credentials that allow the phone 10 to access a Wifi service.

Once determined, the first POS terminal 110 sends to its NFC tag a corresponding set of individual parameters for connecting to a Wifi network.

The NFC tag of the first POS terminal 110 stores a set of several SSIDs, logins and associated passwords, as a set of individual parameters for connecting to a Wifi network, i.e. to be individually allocated to an identified interlocutor device user.

The phone 10 user is sufficiently close to the NFC tag relating to the first POS terminal 110. The phone 10 user taps her/his phone 10 onto the NFC tag to the first POS terminal 110, so as to get one or several parameters for connecting to a Wifi network. The phone 10 is used in an NFC reader mode.

The phone 10 (and more exactly the phone application), as first device, sends, through an NFC link, to the first POS terminal 110, as second device, a message 22 including the IMEI, as phone user identifier, and a request for getting one or several parameters for connecting to a Wifi network.

Alternately, instead of a single phone user identifier, the first device sends, through an NFC link, to the second device, besides the IMEI, additional data, like an associated MSISDN, as two (or more) phone user identifiers.

The first POS terminal 110 (or another entity connected to the first POS terminal 110) stores the IMEI, as phone user identifier that has been received from the phone 10, associated with a second POS terminal 120 address, an SSID, a login and a password, as Wifi network connection parameters that have to be sent to the phone 10, so as to allocate them to the identified phone user.

The first POS terminal 110 sends, through the NFC link, to the phone 10 a message 24 including, as request response, a second POS terminal 120 address, an SSID, a login and a password, as parameters for connecting to a Wifi network that are allocated to the identified phone user.

The phone 10 stores the second POS terminal 120 address, the SSID, the login and the password, as the allocated Wifi network connection parameters.

The phone 10 configures automatically an access to a Wifi network based on the parameters for connecting to a Wifi network, as created network.

The phone 10 is automatically connected to the created network as soon as the phone 10 is under radio coverage of the Wifi hotspot of the second POS terminal 120. Thus, the phone 10 opens, without any user intervention, an out-of band communication channel, as a second CL channel, once the phone 10 is under radio-coverage of the Wifi hotspot of the second POS terminal 120.

Such a phone configuration allows communicating, over a Wifi link, with any POS terminal relating to the network 100 to which the phone user identifier and the Wifi network connection parameters have been propagated in an associated manner.

As a network connection parameter propagation step, the first POS terminal 110 sends to the second POS terminal 120 a message 26 including the IMEI, as phone user identifier, the SSID, the login and the password, as Wifi network connection parameters that are allocated and associated with the concerned phone user identifier.

The first POS terminal 110 may send to the second POS terminal 120 within such a message 26 a request for getting service access data accompanied with the IMEI, as phone user identifier. The second POS terminal 120 may be thus required to send, over an NFC link, to the concerned identified phone user, data for accessing a service. The data for accessing a service allows accessing, over a Wifi link, a Wifi service managed by the second POS terminal 120. The data for accessing a service may include further credentials, like a One-Time Password (or OTP).

The second POS terminal 120 (or another entity connected to the second POS terminal 120) determines data for accessing a service, to be allocated to an identified phone user for a set of a predetermined number of users. The data for accessing a service may include additional credentials that allow the phone 10 to access, over a Wifi link, a Wifi service.

Once determined, the second POS terminal 120 sends to its NFC tag corresponding data for accessing a service.

The NFC tag relating to the second POS terminal 120 stores an address relating to the Wifi hotspot relating to the second POS terminal 120.

The NFC tag relating to the second POS terminal 120 may further store data for accessing a service, as a set of individual data for accessing a service, i.e. to be individually allocated to an identified interlocutor device user.

Once the phone 10 user is sufficiently close to the NFC tag relating to the second POS terminal 120, so as to ensure a local presence of the user prior to initiating a connection to the Wifi hotspot relating to the second POS terminal 120.

The phone 10 user taps her/his phone 10 onto the NFC tag relating to the second POS terminal 120, so as to identify the phone user to the second POS terminal 120 and to get an address relating to the Wifi hotspot relating to the second POS terminal 120 and possibly further data allocated to the identified phone user.

The phone 10 (and more exactly the phone application) sends, through an NFC link, to the second POS terminal 120, as third device, a message 28 including the IMEI, as phone user identifier, and possibly a request for getting data for accessing a service.

The second POS terminal 120 sends, through the NFC link, to the phone 10 a message 210 including, as request response, an address relating to the Wifi hotspot relating to the second POS terminal 120 and possibly data for accessing a service that is allocated to the identified phone user.

The second POS terminal 120 activates the created Wifi network on the Wifi hotspot relating to the second POS terminal 120. The Wifi hotspot relating to the second POS terminal 120 uses, besides the SSID, as virtual network identifier, that has been allocated to the phone user, one or several other virtual network identifiers that are used for managing and communicating with other interlocutor device users in a simultaneous manner.

The phone 10 being configured to access the created Wifi network, the phone 10 sends, through a Wifi link, to the second POS terminal 120 a message 212 including the IMEI, as phone user identifier, and credentials that have been allocated to the phone user through the NFC tag relating to the first POS terminal 110.

Such a message 212 may further include data that is stored within the phone 10, like a boarding pass, so as to access the Wifi service that is managed by the second POS terminal 120.

The second POS terminal 120 determines whether the received credentials matches the allocated credentials that are associated with the IMEI, as the identified phone user. If the received credentials are not associated with the IMEI, the second POS terminal 120 does not authorize the phone user to access the Wifi service, by not opening a corresponding gate. Otherwise, i.e. if the received credentials are associated with the IMEI, the second POS terminal 120 authorizes the phone user to access the Wifi service. A further data exchange over the Wifi link is authorized between the phone 10 and the second POS terminal 120. The phone 10 may send further data that the phone 10 stores at least in a temporary manner, so as to access the Wifi service managed by the second POS terminal 120. Such data is, e.g. a boarding pass allowing to open a corresponding gate to access a corresponding plane.

Such a message 212 may further include the OTP, as data for accessing a service originating from the NFC tag relating to the second POS terminal 120. The second POS terminal 120 determines whether the received OTP matches the allocated OTP that is associated with the IMEI, as the identified phone user. If the received OTP is not associated with the IMEI, the second POS terminal 120 does not authorize the phone user to access the Wifi service, by e.g. not opening a corresponding gate. Otherwise, i.e. if the received OTP is associated with the IMEI, the second POS terminal 120 authorizes the phone user to access the Wifi service.

Alternately, instead of addressing a second POS terminal 120, as third device, the phone 10 addresses only the first POS terminal 110, as second device. According to such an alternative, the phone 10 (and more exactly the phone application), as first device, sends, through an NFC link, to the first POS terminal 110 a message including the IMEI, as phone user identifier, and a request for getting one or several parameters for connecting to a Wifi network. Then, the first POS terminal 110 sends, over the NFC link, to the phone 10 a message including, as request response, an address of a Wifi hotspot relating to the first POS terminal 110, an SSID, a login and a password, as parameters for connecting to a Wifi network that are allocated to the identified phone user. The phone 10 configures automatically an access to a Wifi network based on the allocated parameters for connecting to a Wifi network. The phone 10 sends, through a Wifi link, to the first POS terminal 110 a message including the IMEI, as phone user identifier, and credentials included within the allocated Wifi network connection parameters. The first POS terminal 110 determines whether the received credentials matches the allocated credentials that are associated with the IMEI, as the identified phone user. If the received credentials are not associated with the IMEI, the first POS terminal 110 does not authorize the phone user to access the Wifi service. Otherwise, i.e. if the received credentials are associated with the IMEI, the first POS terminal 110 authorizes the phone user to access the Wifi service. A further data exchange over the Wifi link is authorized between the phone 10 and the first POS terminal 110. The phone 10 may send further data that the phone 10 stores at least in a temporary manner, so as to access the Wifi service managed by the first POS terminal 110.

The user is identified and authenticated by any POS terminal of the network 100 that knows the association of the phone user identifier and the Wifi network connection parameter(s) as she/he is the unique person who is able to connect from her/his phone to such a created Wifi network.

Once the phone 10 has left an area under a radio-coverage relating to the Wifi hotspot(s) of the network 100, then the created Wifi network has been consumed for the concerned phone user and becomes obsolete. The connection to the thus created Wifi network is used during a limited period of time.

The phone user does not have to enter or type any data for configuring the phone 10 to access the Wifi network. The phone 10 sends data in a quasi immediate manner to the Wifi hotspot relating to the concerned POS terminal of the network 100. The described invention solution is compatible with an NFC tap & Go approach. The described invention solution is therefore convenient for the user.

The invention solution allows managing an NFC-like card emulation use from an application supported by a terminal, like the phone 10, which is normally only able to read an NFC tag.

The embodiment that has just been described is not intended to limit the scope of the concerned invention. Other embodiments may be given. As another embodiment example, instead of a user terminal, like the phone 10, a secure element (not represented), as token and first device, supports an application for accessing a Wifi network and carries out the functions that are carried out by the phone 10 as described supra. As another embodiment example, instead of a Wifi type network, the second CL network may be any other wireless type technology network as described supra.

## Claims

1. A method (20) for accessing a contact-less service,
**characterized in that** the method comprises the following steps:
- a first device (10) sends, through a first contact-less link, to a second device (110) at least one first device user identifier (22);
- the second device sends, through the first contact-less link (17), to the first device at least one parameter (24) for connecting to a second contact-less network (100), as at least one second contact-less network connection parameter allocated to the first device user;
- the first device configures automatically an access to a second contact-less network based upon the at least one second contact-less network connection parameter; and
- the first device connects, through a second contact-less link (19), to the second contact-less network, as temporary network.

2. Method according to claim 1, wherein the method further comprises a network connection parameter propagation step in which the second device sends to at least one third device (120) a message (26) including the first device user identifier and the at least one second contact-less network connection parameter.

3. Method according to claim 2, wherein the method further comprises a first device connection preparing step in which the first device sends, through the first contact-less link, to a third device a request (28) for getting service access data accompanied with the first device user identifier and the third device sends, through the first contact-less link, to the first device data (210) for accessing a service.

4. Method according to claim 3, wherein the method further comprises a first device connection step in which the first device sends, through the second contact-less link, to the third device or another device (130) connected to the second device the data (212) for accessing a service.

5. Method according to any of claims 1 to 3, wherein the at least one second contact-less network connection parameter includes at least one of the following elements:
- a virtual network identifier; and
- credentials.

6. Method according to any of claims 4 or 5 depending on claim 4, wherein the service includes at least one of the following elements:
- a payment service;
- a service for loading rights for accessing a restricted area;
- a ticket validation service;
- a service for importing a boarding pass;
- a service for exporting an imported boarding pass.

7. Method according to any of claims 1 to 6, wherein the second contact-less network (100) includes the second device (110).

8. Method according to any of claims 1 to 7, wherein the second contact-less network includes at least one third device (120).

9. A first device (10) for accessing a contact-less service,
**characterized in that** the first device is adapted to:
- send, through a first contact-less link (17), at least one first device user identifier (22);
- receive, through the first contact-less link, at least one parameter for connecting to a second contact-less network, as at least one second contact-less network connection parameter allocated to the first device user;
- configure automatically an access to a second contact-less network based upon the at least one second contact-less network connection parameter; and
- connect, through a second contact-less link (19), to the second contact-less network, as temporary network.

10. Device according to claim 9, wherein the first device includes a mobile device (10) or a secure element.
